(19) Europäisches Patentamt / European Patent Office / Office européen des brevets

(11) EP 2 749 763 A1

# EUROPEAN PATENT APPLICATION
published in accordance with Art. 153(4) EPC

(43) Date of publication:
02.07.2014 Bulletin 2014/27

(21) Application number: 12826097.3

(22) Date of filing: 31.07.2012

(51) Int Cl.:
$F02N \ 11/08$ (2006.01)

(86) International application number:
PCT/JP2012/004853

(87) International publication number:
WO 2013/027337 (28.02.2013 Gazette 2013/09)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 24.08.2011 JP 2011182388

(71) Applicant: Panasonic Corporation
Osaka 571-8501 (JP)

(72) Inventors:
• WATANABE, Hisazumi
2-1-61 Shiromi, Chuo-ku,
Osaka 540-6207 (JP)

• KAKIUCHI, Kimiyasu
2-1-61 Shiromi, Chuo-ku,
Osaka 540-6207 (JP)
• WAGATSUMA, Masato
2-1-61 Shiromi, Chuo-ku,
Osaka 540-6207 (JP)

(74) Representative: Vigand, Philippe et al
Novagraaf International SA
3 chemin de l'Echo
1213 Onex Geneva (CH)

(54) **VEHICLE POWER SOURCE DEVICE**

(57) A vehicle power source device includes a battery, a charging circuit, a capacitor, a switch, a voltage detection circuit, a current detection circuit, a control circuit, and a recording unit. The charging circuit is connected to the battery and the capacitor. A first terminal of the switch is connected to the positive electrode of the capacitor, a second terminal is connected to the positive electrode of the battery, and a third terminal is connected to a starter. The voltage detection circuit is connected in parallel to the capacitor, and detects capacitor voltage Vc. The current detection circuit is connected between the charging circuit and the positive electrode of the capacitor, and detects the capacitor charge current Ic. The control circuit is connected to the charging circuit, the switch, the starter, the voltage detection circuit, the current detection circuit, and the recording unit.

FIG. 1

EP 2 749 763 A1

**Description**

**TECHNICAL FIELD**

The present invention relates to a vehicle power source device to be mounted on a vehicle having an idling-stop function.

**BACKGROUND ART**

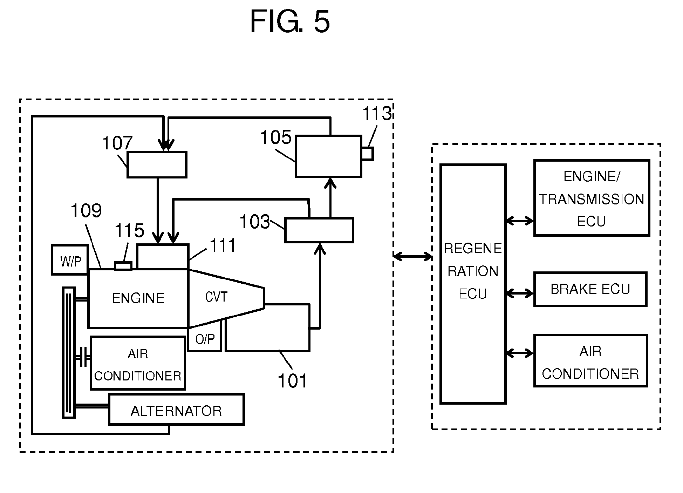

When a starter for starting engine of a vehicle is driven, a start control device supplies the starter with electric power of a capacitor. Fig. 5 is a system configuration diagram of a conventional engine start control device. Energy regenerated by regenerative generator 101 when the vehicle decelerates is stored in capacitor 103. Capacitor 103 is coupled to battery 107 via DC/DC converter 105. Starter 111 for starting engine 109 is driven by any of capacitor 103 and battery 107. Furthermore, voltage sensor 113 for measuring a voltage of capacitor 103 is attached on a primary side of DC/DC converter 105. Engine 109 is provided with engine rotation speed sensor 115 for measuring a number of rotations of engine 109 per unit time. Hereinafter, the number of rotations per unit time is simply referred to as a "number of rotations."

When electric power of capacitor 103 is supplied to starter 111 to start engine 109, electrification from capacitor 103 to starter 111 is stopped before the number of rotations of the engine reaches a target value. The number of rotations at which electrification is stopped is determined according to a capacitor voltage. Thus, blowing-up of engine 109, which occurs when the number of rotations becomes larger than the target value, does not occur, so that engine 109 is started excellently. Examples of the above-mentioned prior art documents include patent literature 1.

**Citation List**

**Patent Literature**

PTL 1: Japanese Patent Unexamined Publication No. 2003-35243

**SUMMARY OF THE INVENTION**

A vehicle power source device which is used in a vehicle having engine and a starter for starting the engine and which drives the starter includes a battery, a charging circuit, a capacitor, a switch, a voltage detection circuit, a current detection circuit, a control circuit, and a storage unit. The charging circuit is electrically connected to a positive electrode of the battery. A positive electrode of the capacitor is electrically connected to the charging circuit. A first terminal of the switch is connected to the positive electrode of the capacitor, a second terminal is connected to the positive electrode of the battery, and a third terminal is connected to the starter. The voltage detection circuit is connected in parallel to the capacitor, and detects a capacitor voltage (Vc). The current detection circuit is connected between the charging circuit and the positive electrode of the capacitor, and detects a capacitor charge current (Ic). The storage unit holds values of a starter driving energy (Es), a capacitor voltage (Ve) immediately before start of engine, a starter internal resistance (Rs), and a starter maximum electric current (Is). The control circuit is electrically connected to the charging circuit, the switch, the starter, the voltage detection circuit, the current detection circuit, and the recording unit.

The third terminal of the switch can be connected to the first terminal or the second terminal. When a capacitor is charged so as to drive the starter, the control circuit obtains a capacitor equivalent series resistance (R) and a capacitor capacitance (C) from the capacitor voltage (Vc) and the capacitor charge current (Ic). Then, the control circuit controls a charging circuit to charge capacitor to capacitor charge voltage (V1) determined based on the capacitor equivalent series resistance (R), the capacitor capacitance (C), as well as the starter driving energy (Es), the capacitor voltage (Ve) immediately before start of engine, the starter internal resistance (Rs), and the starter maximum electric current (Is) held in the storage unit.

Herein, the starter driving energy (Es) is electrical energy for driving the starter. The capacitor voltage (Ve) immediately before start of engine is a capacitor voltage immediately before the engine starts and begins to rotate. The starter internal resistance (Rs) is internal resistance of the starter. The starter maximum electric current (Is) is an electric current necessary for the starter to begin rotating.

**BRIEF DESCRIPTION OF DRAWINGS**

Fig. 1 is a block circuit diagram of a vehicle power source device in accordance with an exemplary embodiment of the present invention.

Fig. 2A is a flowchart showing a charge operation of a capacitor of the vehicle power source device in accordance with the exemplary embodiment of the present invention.

Fig. 2B is a flowchart continuing to the operation of Fig. 2A, showing a charge operation of the capacitor of the vehicle power source device in accordance with the exemplary embodiment of the present invention.

Fig. 3 is a flowchart showing a drive operation of a starter of the vehicle power source device in accordance with the exemplary embodiment of the present invention.

Fig. 4 is a graph showing characteristics with time of a capacitor voltage at a time when the starter of the vehicle power source device is driven in accordance with the exemplary embodiment of the present invention.

Fig. 5 is a system configuration diagram of a conventional engine start control device.

## DESCRIPTION OF EMBODIMENTS

In a conventional engine start control device, a number of rotations at which electrification is stopped is determined according to a capacitor voltage. Therefore, an influence of a state in which a high capacitor voltage continues (40 V in PTL 1) on a lifetime of a capacitor is not considered. When the state in which a capacitor voltage is high continues, a lifetime of capacitor 103 may be shortened.

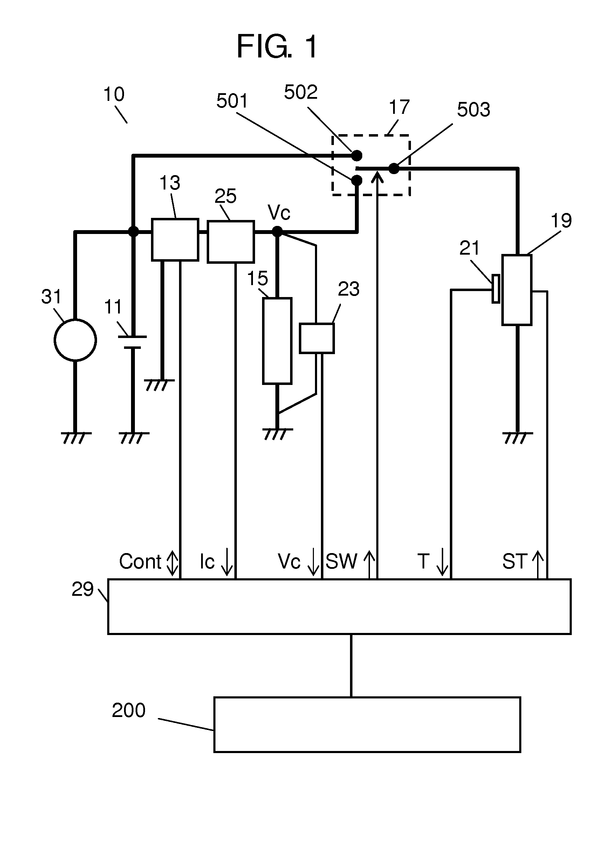

Hereinafter, this exemplary embodiment is described with reference to drawings. Fig. 1 is a block circuit diagram of a vehicle power source device in accordance with this exemplary embodiment. In Fig. 1, a bold line shows electric power wiring and a thin line shows signal wiring, respectively. Furthermore, a vehicle in this exemplary embodiment has an idling-stop function.

Vehicle power source device 10 includes battery 11, charging circuit 13, capacitor 15, switch 17, starter 19, voltage detection circuit 23, current detection circuit 25, control circuit 29, and storage unit 200. Battery 11 is mounted on a vehicle (not shown) having engine (not shown). Charging circuit 13 is electrically connected to a positive electrode of battery 11. A positive electrode of capacitor 15 is electrically connected to charging circuit 13. That is to say, capacitor 15 is electrically connected to battery 11 via charging circuit 13. In three-terminal switch 17, first terminal 501 is connected to the positive electrode of capacitor 15, second terminal 502 is connected to the positive electrode of battery 11, and third terminal 503 is electrically connected to starter 19. First terminal 501 and second terminal 502 are selection terminals, and third terminal 503 is a common terminal.

Voltage detection circuit 23 is connected in parallel to capacitor 15, and detects capacitor voltage Vc. Current detection circuit 25 is connected between charging circuit 13 and the positive electrode of capacitor 15, and detects capacitor charge current Ic. Storage unit 200 holds predetermined values of starter driving energy (Es), capacitor voltage (Ve) immediately before start of engine, starter internal resistance (Rs), and starter maximum electric current (Is). Control circuit 29 is electrically connected to charging circuit 13, switch 17, starter 19, voltage detection circuit 23, current detection circuit 25, and storage unit 200.

When capacitor 15 is charged, control circuit 29 obtains capacitor equivalent series resistance R and capacitor capacitance C from capacitor voltage Vc and capacitor charge current Ic. Then, control circuit 29 controls charging circuit 13 to charge capacitor 15 to capacitor charge voltage V1 determined based on capacitor equivalent series resistance R, capacitor capacitance C, and predetermined starter driving energy Es, capacitor voltage Ve immediately before start of engine, starter internal resistance Rs, and starter maximum electric current Is, which are held in storage unit 200.

That is to say, capacitor 15 is charged to capacitor charge voltage V1 that is a voltage capable of driving starter 19 based on capacitor equivalent series resistance R and capacitor capacitance C reflecting a deterioration state of capacitor 15. When, in capacitor 15, capacitor equivalent series resistance R is small and capacitor capacitance C is large, it is possible to prevent capacitor 15 from being charged with an unnecessarily high voltage for driving starter 19. Consequently, the progress of deterioration of capacitor 15 is delayed. That is to say, starter 19 can be driven such that the lifetime of capacitor 15 can be increased.

Hereinafter, configurations and operations of this exemplary embodiment are described more specifically. In Fig. 1, generator 31 mounted on a vehicle generates electric power by engine. Battery 11 and load (not shown) including various electric components are electrically connected to generator 31 by electric power wiring. Battery 11 is, for example, lead-acid battery.

Charging circuit 13 is electrically connected to the positive electrode of battery 11. Charging circuit 13 charges capacitor 15 with electric power of battery 11 and generator 31. Charging circuit 13 is, for example, a DC/DC converter. This changes constant current charging at an initial stage of charging and constant voltage charging at a final stage of charging from each other so as to charge capacitor 15. Note here that charging circuit 13 is not limited to a DC/DC converter, it may be a combination of a dropper circuit, a resistor, a switch, and the like.

Capacitor 15 is electrically connected to charging circuit 13. Capacitor 15 is formed of an electric double layer capacitor. Specifically, capacitor 15 is formed by connecting six electric double layer capacitors having a rated voltage of 2.5 V. Therefore, capacitor 15 can be charged to 15 V (= 2.5 V x 6), and sufficiently charged to a voltage (14.5 V) generated by generator 31. Note here that a voltage of 15 V is referred to as a preset upper-limit voltage V1u. However, preset upper-limit voltage V1u is not limited to 15 V, and appropriately determined corresponding to the rated voltage or a number of the electric double layer capacitors to be used.

The positive electrode of capacitor 15 is electrically connected to first terminal 501 as the selection terminal of switch 17. The positive electrode of battery 11 is electrically connected to second terminal 502 as the selection terminal of switch 17. Starter 19 is electrically connected to third terminal 503 as the common terminal of switch 17. Starter 19 uses a direct current motor method and is used for starting engine. That is to say, switch 17 is a relay having a three-terminal configuration including two selection terminals (first terminal 501 and second terminal 502) and one common terminal (third terminal 503). From a signal from the outside, switch 17 is changed between an ON state in which the common terminal is connected to any of the selection terminals and an OFF state in which the common terminal is not connected to any selection terminals. At a usual time at which starter 19 is not driven, switch 17 is in an OFF state.

The configuration of switch 17 is not necessarily limited to the three-terminal configuration. The configuration that is equivalent to the three-terminal configuration by combining two ON-OFF switches may be employed. Furthermore, switch 17 is not necessarily limited to a relay, and a semiconductor switch element or the like may be used.

Starter 19 is provided with temperature sensor 21 for detecting temperature T thereof. As temperature sensor 21, a thermistor having high sensitivity with respect to temperature T is used. However, temperature sensor 21 is not necessarily limited to a thermistor, and other methods such as a thermocouple may be employed. Furthermore, in this exemplary embodiment, temperature sensor 21 is disposed on starter 19, but it may be disposed on engine. Since the engine and starter 19 are disposed adjacent to each other, a temperature difference therebetween is small. Therefore, temperature sensor 21 may be disposed on starter 19 or on the engine. That is to say, a place at which temperature sensor 21 is disposed is not particularly limited as long as a temperature of starter 19 or the engine can be measured.

In capacitor 15, voltage detection circuit 23 is connected in parallel. Voltage detection circuit 23 detects capacitor voltage Vc and outputs it to control circuit 29. Current detection circuit 25 is connected to a capacitor 15 side of charging circuit 13. That is to say, current detection circuit 25 is connected between charging circuit 13 and the positive electrode of capacitor 15. Current detection circuit 25 detects capacitor charge current Ic and outputs it to control circuit 29. Current detection circuit 25 uses a shunt resistance method having a simple configuration. However, current detection circuit 25 is not necessarily limited to the shunt resistance method, but a magnetic detection method using a Hall element may be used.

Charging circuit 13, switch 17, starter 19, temperature sensor 21, voltage detection circuit 23, and current detection circuit 25 are electrically coupled to control circuit 29 via signal wiring. Control circuit 29 may have a configuration that controls a vehicle as a whole. In this case, control circuit 29 is coupled to various apparatuses other than those shown in Fig. 1 via signal wiring. However, in this exemplary embodiment, apparatuses other than apparatuses necessary for describing the configurations and the operations are omitted.

Control circuit 29 includes microcomputer and peripheral circuits such as a memory. Control circuit 29 and storage unit 200 may be configured integrally with each other. Control circuit 29 detects temperature T from temperature sensor 21, capacitor voltage Vc from voltage detection circuit 23, and capacitor charge current Ic from current detection circuit 25. Furthermore, control circuit 29 outputs starter signal ST so as to control the drive of starter 19, and outputs switch signal SW so as to change switch 17. Furthermore, control circuit 29 controls charging circuit 13 by a control signal "Cont". Herein, the control signal "Cont" is a bidirectional signal, and outputs an operation state of charging circuit 13 to control circuit 29 in addition to controlling charging circuit 13. Therefore, control circuit 29 can carry out feedback control (for example, constant current control and constant voltage control) of charging circuit 13 based on capacitor voltage Vc and capacitor charge current Ic.

Note here that generator 31, starter 19, battery 11, charging circuit 13, and the negative electrode of capacitor 15 are grounded.

Next, an operation of vehicle power source device 10 is described. Since a vehicle of this exemplary embodiment has an idling-stop function, when the vehicle stops, engine stops and restarts before running. Operations peculiar to this exemplary embodiment in the series of operations are described in detail hereinafter.

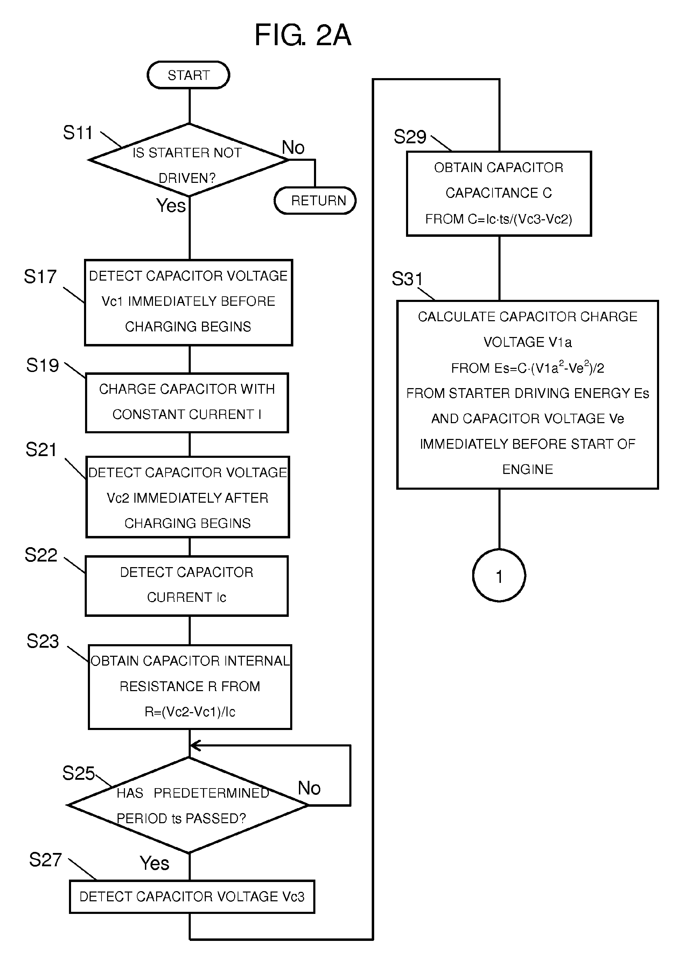

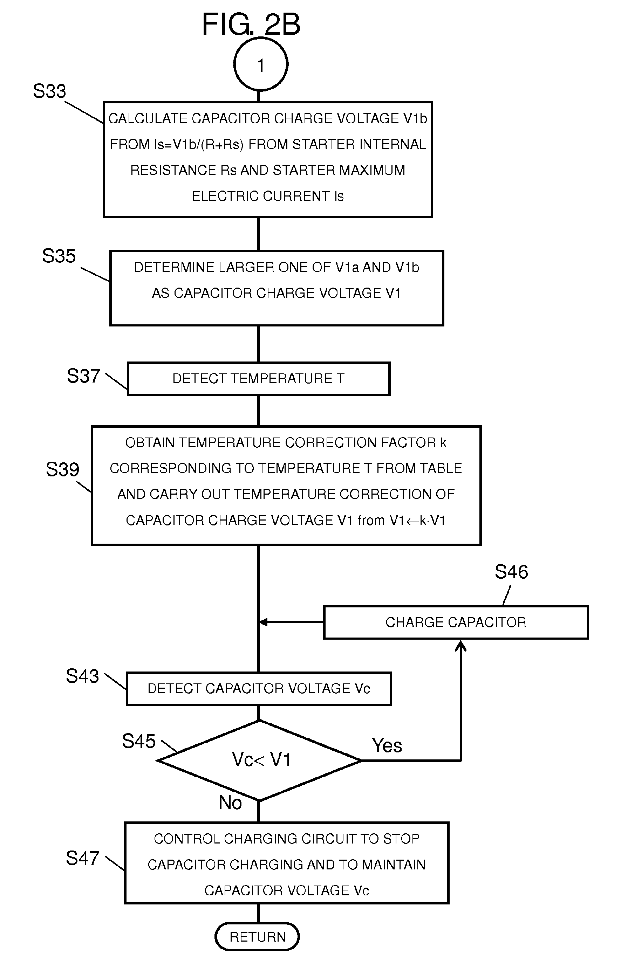

Firstly, a charge operation of capacitor 15 is described. Capacitor 15 is charged by charging circuit 13 in a time during which a vehicle is used and starter 19 is not driven. Fig. 2A is a flowchart showing a charge operation of a capacitor of the vehicle power source device of this exemplary embodiment. Fig. 2B is a flowchart of operations continuing to Fig. 2A and shows a charge operation of the capacitor of the vehicle power source device in accordance with the exemplary embodiment of the present invention. Figs. 2A and 2B show subroutines executed, at the time when capacitor 15 is charged, from a main routine (not shown) of microcomputer incorporated in control circuit 29.

When the subroutines of Figs. 2B and 2A are executed from the main routine, firstly, control circuit 29 decides whether starter 19 is not driven (step number S11). If starter 19 is driven (No in S11), capacitor 15 is not charged because battery 11 or capacitor 15 discharges a large electric current to starter 19. Then, control circuit 29 does not carry out a charge operation of capacitor 15, ends the subroutines of Figs. 2A and 2B, and returns to the main routine.

On the other hand, when starter 19 is not driven (Yes in S11), charging to capacitor 15 can be carried out. Firstly, control circuit 29 detects capacitor voltage Vc1 immediately before charging begins (S17). Next, control circuit 29 charges capacitor 15 with preset constant current I (S19), and soon detects capacitor voltage Vc2 immediately after charging begins (S21). Note here that a value of preset constant current I is appropriately determined based on specifications of capacitor 15 to be used, a period necessary for charging, an allowable electric current value of charging circuit 13, and the like. Current detection circuit 25 measures constant current I as capacitor charge current Ic (S22).

From such detection values, control circuit 29 obtains capacitor equivalent series resistance R from Equation 1 (S23).

[Math. 1]

$$R = (Vc2 - Vc1)/Ic \qquad \text{(Equation 1)}$$

Next, control circuit 29 decides whether or not predetermined period ts has passed after charging begins (S25). Predetermined period ts can be arbitrarily set as long as it is a period until charge of capacitor 15 is completed. However, since the period until the charge is completed varies depending upon use states of a vehicle, it is desirable that the period is about several seconds.

If predetermined period ts has not passed (No in S25), control circuit 29 returns to step S25 and is on standby until predetermined period ts passes.

On the other hand, predetermined period ts has passed (Yes in S25), control circuit 29 detects capacitor voltage Vc3 at the time point (S27). Then, control circuit 29 obtains capacitor capacitance C from Equation 2 (S29).

[Math. 2]

$$C = Ic \cdot ts/(Vc3 - Vc2) \qquad \text{(Equation 2)}$$

Next, control circuit 29 determines capacitor charge voltage V1 based on the above-mentioned capacitor equivalent series resistance R and capacitor capacitance C, as well as starter driving energy Es, capacitor voltage Ve immediately before start of engine, starter internal resistance Rs, and starter maximum electric current Is. Note here that as values of starter driving energy Es, capacitor voltage Ve immediately before start of engine, starter internal resistance Rs, and starter maximum electric current Is, predetermined values held in storage unit 200 are used. However, these predetermined values are updated based on change with time of capacitor voltage Vc. An updating method is described later.

Hereinafter, a method for determining capacitor charge voltage V1 is described. Firstly, as electrical energy to be stored in capacitor 15, electrical energy that is sufficient to drive starter 19 is necessary. Herein, the electrical energy stored in capacitor 15 is represented by Equation 3A by using capacitor charge voltage V1, capacitor voltage Ve immediately before start of engine, and capacitor capacitance C. This electrical energy is starter driving energy Es.

[Math. 3A]

$$Es = C \cdot (V1^2 - Ve^2)/2 \qquad \text{(Equation 3A)}$$

By using Equation 3A, control circuit 29 obtains capacitor charge voltage V1 from starter driving energy Es, capacitor voltage Ve immediately before start of engine, and capacitor capacitance C. Capacitor charge voltage V1 in this case is defined as capacitor charge voltage V1a (S31). That is to say, V1a is represented by Equation 3B.

[Math. 3B]

$$V1a = ((2Es/C) + Ve^2)^{1/2} \qquad \text{(Equation 3B)}$$

On the other hand, in order to start engine by driving starter 19, an electric current flowing from capacitor 15 to starter 19 must be equal to or larger than a maximum electric current (starter maximum electric current Is) obtained from torque necessary for starter 19 to begin rotation. That is to say, when the flowing electric current is lower than starter maximum electric current Is, engine cannot be started. Then, starter maximum electric current Is flowing from

5

capacitor 15 to starter 19 is represented by Equation 4A by using starter internal resistance Rs.
[Math. 4A]

$$Is = V1/(R + Rs) \qquad (\text{Equation 4A})$$

From Equation 4A, control circuit 29 obtains capacitor charge voltage V1 from starter internal resistance Rs, starter maximum electric current Is, and capacitor equivalent series resistance R. Capacitor charge voltage V1 in this case is defined as capacitor charge voltage V1b (S33). That is to say, V1b is represented by Equation 4B.
[Math. 4B]

$$V1b = Is \cdot (R + Rs) \qquad (\text{Equation 4B})$$

From the above description, capacitor charge voltage V1 satisfying Equation 3B and Equation 4B is determined as follows. From Equation 3B and Equation 4B, two capacitor charge voltages V1a and V1b are obtained. In this case, since Equation 3B and Equation 4B are minimum conditions that must be satisfied, control circuit 29 determines a large one of two capacitor charge voltages V1a and V1b as capacitor charge voltage V1 (S35). Thus, even when a parameter is changed depending upon, for example, a state of a vehicle, electric power necessary and sufficient to drive starter 19 is stored in capacitor 15.

Next, control circuit 29 carries out temperature correction of the determined capacitor charge voltage V1. Specifically, according to temperature T detected by temperature sensor 21, by multiplying capacitor charge voltage V1 by previously obtained temperature correction factor k, final capacitor charge voltage V1 is determined. Herein, as temperature correction factor k is set such that capacitor charge voltage V1 is increased as temperature T is lower. As temperature T is lower, load becomes larger because engine or auxiliary machines are not warmed. As a result, starter 19 is not easily driven. On the other hand, as temperature T is higher, load becomes smaller because engine or auxiliary machines are warmed, resulting in increasing the possibility that an overcurrent flows into starter 19. Therefore, relation between temperature T and energy necessary for driving starter 19 (starter driving energy Es) is obtained in advance, and temperature correction factor k of capacitor charge voltage V1 is determined based on the relation. The thus obtained temperature correction factor k is stored as a table showing the relation with respect to temperature T, in storage unit 200.

In this exemplary embodiment, the relation between temperature T and temperature correction factor k is stored as a table in storage unit 200. However, temperature correction factor k may be obtained by obtaining an approximate expression of temperature T and temperature correction factor k from the least square approximation, and substituting temperature T into this approximate expression.

An operation of temperature correction is described with reference to Fig. 2B. Firstly, control circuit 29 detects temperature T by temperature sensor 21 (S37). Next, control circuit 29 obtains temperature correction factor k corresponding to temperature T from the table, and multiplies capacitor charge voltage V1 determined in S35 by temperature correction factor k, and a value of k·V1 is defined as capacitor charge voltage V1. Thus, temperature correction of capacitor charge voltage V1 is carried out (S39).

Control circuit 29 detects capacitor voltage Vc (S43), compares capacitor voltage Vc and capacitor charge voltage V1 with each other (S45). If capacitor voltage Vc is less than capacitor charge voltage V1 (Yes in S45), charging of capacitor 15 has not been completed, and, therefore, control circuit 29 continues to charge capacitor 15 (S46).

On the other hand, when capacitor voltage Vc is not less than capacitor charge voltage V1 (No in S45), control circuit 29 controls charging circuit 13 to stop charging of capacitor 15 and to regulate capacitor voltage Vc (S47). Thereafter, control unit 29 ends the subroutines of Figs. 2A and 2B and returns to the main routine.

Charging of capacitor 15 begins in S19. In S19, charging of capacitor 15 is carried out with constant current I in order to avoid rush current. In S46, when the charging approaches completion, control circuit 29 controls charging circuit 13 to change the charging to constant voltage charging. This reduces application of an overvoltage to capacitor 15.

Furthermore, when capacitor charge voltage V1 is larger than preset upper-limit voltage V1u, control circuit 29 does not carry out charging to capacitor 15. This deciding operation is carried out in the main routine before the subroutines of Figs. 2A and 2B are executed. This suppresses application of an overvoltage to capacitor 15. Furthermore, capacitor charge voltage V1 may become larger than preset upper-limit voltage V1u because of deterioration of capacitor 15 and the deterioration is caused because capacitor equivalent series resistance R is large and capacitor capacitance C is small. Therefore, when capacitor charge voltage V1 is larger than preset upper-limit voltage V1u, control circuit 29 may warn a driver of deterioration of capacitor 15.

Furthermore, as mentioned above, in a case where cause is deterioration of capacitor 15, since charging to capacitor 15 cannot be carried out, drive of starter 19 by capacitor 15 cannot be carried out. Thus, in this case, control circuit 29 connects second terminal 502 and third terminal 503 of switch 17 to each other so as to drive starter 19 by a battery.

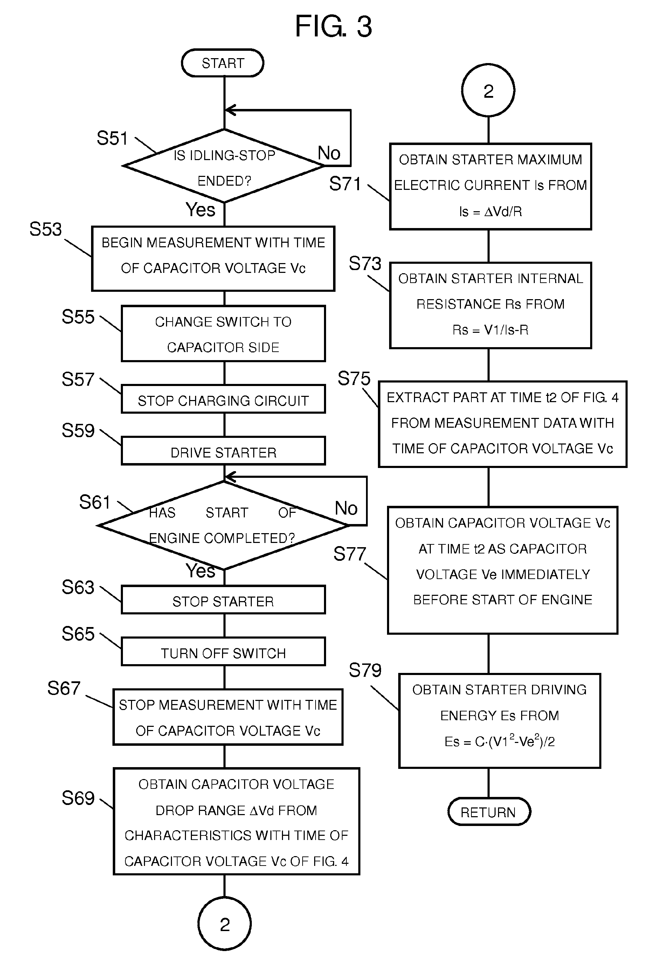

Next, a drive operation of starter 19 when charging of capacitor 15 can be carried out in a state in which capacitor charge voltage V1 is not higher than preset upper-limit voltage V1u is described with reference to Fig. 3. Fig. 3 is a flowchart showing a drive operation of the starter of the vehicle power source device of this exemplary embodiment. Similar to Figs. 2A and 2B, the flowchart of Fig. 3 also shows a subroutine which executed from the main routine.

When a vehicle stops engine by idling-stop, control circuit 29 executes subroutine of Fig. 3. Firstly, control circuit 29 decides whether or not the idling-stop is ended (S51). Herein, the end of the idling-stop can be judged when control circuit 29 detects that a driver changes from depressing a brake pedal to depressing an accelerator pedal.

If the idling-stop is not ended (No in S51), control circuit 29 returns to S51 and waits for the end of the idling-stop.

On the other hand, when the idling-stop is ended (Yes in S51), engine is restarted by starter 19. Specifically, firstly, control circuit 29 measures capacitor voltage Vc with time (S53). In detail, control circuit 29 continues to sample capacitor voltage Vc at a constant interval.

Next, control circuit 29 outputs switch signal SW to connect first terminal 501 and third terminal 503 of switch 17 to each other (S55), and outputs a control signal "Cont" so as to stop charging circuit 13 (S57). Then, control circuit 29 outputs starter signal ST so as to drive starter 19 (S59). With these operations, starter 19 is driven by electric power of capacitor 15.

Next, control circuit 29 decides whether or not start of the engine is completed (S61). Completion of the start of the engine is judged from, for example, the number of rotations of the engine. If the start of the engine is not completed (No in S61), control circuit 29 returns to S61 and is on standby until the start of the engine is completed.

On the other hand, when the start of the engine is completed (Yes in S61), control circuit 29 outputs starter signal ST so as to stop starter 19 (S63) and outputs switch signal SW so as to turn off switch 17 (S65). Then, control circuit 29 stops measuring with time of capacitor voltage Vc (S67).

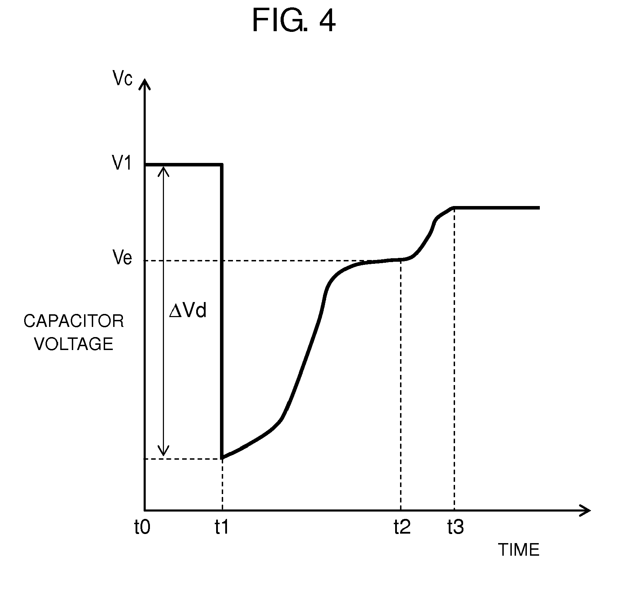

With such an operation, control circuit 29 obtains characteristics with time of capacitor voltage Vc shown in Fig. 4. Fig. 4 is a graph showing characteristics with time of a capacitor voltage of the vehicle power source device when the starter is driven in accordance with this exemplary embodiment. From the wave profile of the characteristics with time, control circuit 29 obtains starter maximum electric current Is, starter internal resistance Rs, capacitor voltage Ve immediately before start of engine, and starter driving energy Es. Hereinafter, a specific obtaining method is described sequentially.

Firstly, control circuit 29 obtains starter maximum electric current Is based on a wave profile at the initial stage of drive of starter 19, that is, a wave profile of capacitor voltage Vc from time t0 to time t1 in Fig. 4. Specifically, at time t0 at which electric current does not flow in starter 19, capacitor voltage Vc is capacitor charge voltage V1. Then, at time t1 immediately after starter 19 is driven, as shown in Fig. 4, capacitor voltage Vc causes voltage drop rapidly according to capacitor equivalent series resistance R. At this time, since starter maximum electric current Is flows from capacitor 15, capacitor voltage drop range ΔVd is represented by Equation 5A.

[Math. 5A]

$$\Delta \mathrm{Vd} = \mathrm{Is} \cdot \mathrm{R} \qquad (\text{Equation 5A})$$

Herein, capacitor equivalent series resistance R has been already obtained as mentioned above. Therefore, control circuit 29 obtains capacitor voltage drop range ΔVd from characteristics with time of capacitor voltage Vc of Fig. 4 (S69). Next, control circuit 29 calculates starter maximum electric current Is from Equation 5B (S71).

[Math. 5B]

$$\mathrm{Is} = \Delta \mathrm{Vd}/\mathrm{R} \qquad (\text{Equation 5B})$$

Next, control circuit 29 obtains starter internal resistance Rs from Equation 6 by substituting the obtained starter maximum electric current Is into Equation 4A (S73).

[Math. 6]

$$\mathrm{Rs} = \mathrm{V1}/\mathrm{Is} \cdot \mathrm{R} \qquad (\text{Equation 6})$$

Next, control circuit 29 obtains capacitor voltage Ve immediately before start of engine from a wave profile of Fig. 4. That is to say, in Fig. 4, by drive of starter 19, capacitor voltage Vc is largely dropped at time t1, and recovered until time t2 that is a time immediately before the engine starts and begins to rotate. Then, when the engine begins to rotate, starter 19 is driven by the engine, so that load is reduced, and capacitor voltage Vc is further recovered rapidly between time t2 and time t3. A voltage at time t2 is capacitor voltage Ve immediately before start of engine. Therefore, control circuit 29 extracts a wave profile at which capacitor voltage Vc around time t2 of Fig. 4 is changed, from data of characteristics with time of capacitor voltage Vc (S75). Next, control circuit 29 obtains capacitor voltage Vc at time t2 as capacitor voltage Ve immediately before start of engine (S77). As mentioned above, a period during which capacitor voltage Vc reaches capacitor voltage Ve immediately before start of engine (from the time immediately before t1 to t2) is a period during which starter 19 is substantially driven by electric power of capacitor 15.

Next, control circuit 29 obtains starter driving energy Es by substituting capacitor voltage Ve immediately before start of engine into Equation 3A (S79).

Thus, control circuit 29 drives starter 19, and obtains starter maximum electric current Is, starter internal resistance Rs, capacitor voltage Ve immediately before start of engine, and starter driving energy Es, from the characteristics with time of capacitor voltage Vc at the time. Then, control circuit 29 holds values of starter maximum electric current Is, starter internal resistance Rs, capacitor voltage Ve immediately before start of engine, and starter driving energy Es, which are held in storage unit 200. Thereafter, control circuit 29 ends the subroutine of Fig. 3 and returns to the main routine.

Control circuit 29 carries out next charging of capacitor 15 by using starter maximum electric current Is, starter internal resistance Rs, capacitor voltage Ve immediately before start of engine, and starter driving energy Es, which are obtained as mentioned above. By repeating such operations, even when various parameters are changed when a vehicle is used, control circuit 29 can cope with it immediately, thus enabling highly precise capacitor charge voltage V1 to be determined. As a result, starter 19 can be driven such that the lifetime of capacitor 15 is increased.

In this exemplary embodiment, when capacitor capacitance C is small and an electric current value of the constant current charging is large, charging of capacitor 15 is completed in an early stage after the engine starts. However, when capacitor capacitance C is large or an electric current value of the constant current charging is small, starter 19 may be driven when charging of capacitor 15 is not completed. This may occur, for example, when idling-stop begins during charging of capacitor 15, and soon a driver changes depressing of a brake pedal to depressing of an accelerator pedal. In this case, in this exemplary embodiment, the main routine of control circuit 29 immediately stops charging of capacitor 15. Then, since capacitor 15 cannot drive starter 19 sufficiently, control circuit 29 connects second terminal 502 and third terminal 503 of switch 17 to each other so as to drive driving starter 19 by electric power of battery 11. This prevents the engine from being unable to restart after idling-stop.

Furthermore, at the beginning of use of a vehicle, electric power enough to carry out initial start of engine may not be stored in capacitor 15 because capacitor voltage Vc is reduced due to self-discharge at the time when a vehicle is not used. Thus, at the beginning of use of a vehicle, control circuit 29 connects second terminal 502 and third terminal 503 of switch 17 to each other so as to drive starter 19 by electric power of battery 11.

However, when capacitor voltage Vc is a value that can sufficiently drive starter 19 at the beginning of use of a vehicle, that is, a value equal to or larger than capacitor charge voltage V1, starter 19 may be driven by capacitor 15.

Furthermore, a value obtained by multiplying values of starter maximum electric current Is, starter internal resistance Rs, capacitor voltage Ve immediately before start of engine, and starter driving energy Es by safety factor necessary for secure drive of starter 19 may be applied also at the time when charging of capacitor 15 in the next use time of the vehicle.

With the above-mentioned configurations and operations, based on capacitor equivalent series resistance R and capacitor capacitance C, which reflect a deterioration state of capacitor 15, capacitor 15 is charged to a voltage that can drive starter 19, that is, capacitor charge voltage V1. This prevents capacitor 15 from being charged with unnecessarily high voltage due to the drive of starter 19 also in the case where capacitor equivalent series resistance R is small and capacitor capacitance C is large in capacitor 15. Consequently, progress of deterioration of capacitor 15 becomes slow. That is to say, it is possible to achieve vehicle power source device 10 capable of driving starter 19 such that the lifetime of capacitor 15 can be increased. Furthermore, this can also prevent starter 19 from being applied with an unnecessarily high voltage. Consequently, the lifetime of starter 19 can be increased.

Note here that in this exemplary embodiment, control circuit 29 carries out charging of capacitor 15 by drive of starter 19 after the start of the engine is completed. As a result, capacitor 15 is charged with electric power of generator 31 operated by engine. However, charging of capacitor 15 is not limited to the time when generator 31 is operated, and it may be carried out any time as long as starter 19 stops. For example, capacitor 15 may be charged in a state in which generator 31 stops (during idling-stop, when a driver opens a door of a vehicle, when a door is unlocked, and the like). However, in this case, since capacitor 15 is charged with electric power of battery 11, unless battery 11 is sufficiently charged with large capacitance, a burden of battery 11 is increased. Therefore, it is preferable that capacitor 15 is charged with electric power of generator 31 as in this exemplary embodiment.

Furthermore, in this exemplary embodiment, capacitor charge voltage V1 is corrected at temperature T, but temperature correction may not be particularly carried out when capacitor charge voltage V1 corrected by a temperature correction factor falls in an error range as compared with that before correction.

Furthermore, in this exemplary embodiment, from the characteristics with time of capacitor voltage Vc of Fig. 4, values of starter maximum electric current Is, starter internal resistance Rs, capacitor voltage Ve immediately before start of engine, and starter driving energy Es are updated. However, these values may not be updated and predetermined values held in storage unit 200 may be used as it is. In this case, since it is not necessary to obtain the wave profile of Fig. 4, a burden of control circuit 29 is reduced.

Furthermore, only starter maximum electric current Is and starter internal resistance Rs, which are obtained at the initial stage of drive of starter 19, are obtained in this exemplary embodiment, and capacitor voltage Ve immediately before start of engine and starter driving energy Es may be predetermined values. Also in this case, it is possible to obtain capacitor charge voltage V1. However, as mentioned in this exemplary embodiment, it is preferable to obtain starter maximum electric current Is, starter internal resistance Rs, capacitor voltage Ve immediately before start of engine, and starter driving energy Es by characteristics with time of capacitor voltage Vc because more precise capacitor charge voltage V1 can be obtained.

Furthermore, in this exemplary embodiment, an electric double layer capacitor is used as capacitor 15, but capacitor 15 is not limited to this, and large-capacitance capacitors such as an electrochemical capacitor may be used.

## INDUSTRIAL APPLICABILITY

A vehicle power source device in accordance with the present invention can drive a starter so as to increase a lifetime of a capacitor, and, therefore, it is useful as a vehicle power source device and the like mounted on a vehicle having an idling-stop function.

## REFERENCE MARKS IN THE DRAWINGS

|   |   |
|---|---|
| 10 | vehicle power source device |
| 11 | battery |
| 13 | charging circuit |
| 15 | capacitor |
| 17 | switch |
| 19 | starter |
| 21 | temperature sensor |
| 23 | voltage detection circuit |
| 25 | current detection circuit |
| 29 | control circuit, |
| 31 | generator |
| 200 | storage unit |
| 501 | first terminal |
| 502 | second terminal |
| 503 | third terminal |

## Claims

1. A vehicle power source device which is used in a vehicle having an engine and a starter for starting the engine and which drives the starter, comprising:

    a battery;
    a charging circuit electrically connected to a positive electrode of the battery;
    a capacitor having a positive electrode electrically connected to the charging circuit;
    a three-terminal switch including a first terminal connected to the positive electrode of the capacitor, a second terminal connected to the positive electrode of the battery, and a third terminal connected to the starter;
    a voltage detection circuit connected in parallel to the capacitor, and detecting capacitor voltage Vc;
    a current detection circuit connected between the charging circuit and the positive electrode of the capacitor, and detecting capacitor charge current Ic;
    a storage unit for holding values of starter driving energy Es, which is electrical energy for driving the starter, capacitor voltage Ve immediately before start of engine, which is a capacitor voltage immediately before the engine starts and begins rotating, starter internal resistance Rs which is internal resistance of the starter, and starter maximum electric current Is which is an electric current necessary for the starter to begin rotating; and a control circuit electrically connected to the charging circuit, the switch, the starter, the voltage detection circuit, the current detection circuit, and the storage unit,

wherein the third terminal of the switch is capable of being connected to the first terminal or the second terminal, when the capacitor is charged to drive the starter, the control circuit obtains capacitor equivalent series resistance R and capacitor capacitance C from the capacitor voltage Vc and the capacitor charge current Ic, and controls the charging circuit to charge the capacitor to capacitor charge voltage V1 based on

the capacitor equivalent series resistance R,

the capacitor capacitance C,

a value of starter driving energy Es held in the storage unit,

a value of capacitor voltage Ve immediately before start of engine, which is held in the storage unit,

a value of starter internal resistance Rs held in the storage unit, and

a value of starter maximum electric current Is held in the storage unit.

2. The vehicle power source device of claim 1, wherein the capacitor voltage Vc includes a capacitor voltage Vc1 immediately before charging begins, a capacitor voltage Vc2 immediately after charging begins , and a capacitor voltage Vc3 at a time point at which predetermined period ts has passed, and

the control circuit obtains the capacitor equivalent series resistance R from Equation 1, obtains the capacitor capacitance C from Equation 2, and defines larger one of V1a obtained from Equation 3 and V1b obtained from Equation 4 as the capacitor charge voltage V1.

[Math. 1]

$$R = (Vc2 - Vc1)/Ic \qquad (\text{Equation 1})$$

[Math. 2]

$$C = Ic \cdot ts/(Vc3 - Vc2) \qquad (\text{Equation 2})$$

[Math. 3]

$$V1a = ((2Es/C) + Ve^2)^{1/2} \qquad (\text{Equation 3})$$

[Math. 4]

$$V1b = Is \cdot (R + Rs) \qquad (\text{Equation 4})$$

3. The vehicle power source device of claim 1, wherein when the control circuit connects the first terminal and the third terminal of the switch to each other to drive the starter, the control circuit measures the capacitor voltage Vc with time, updates values of the capacitor voltage Ve immediately before start of engine and the starter driving energy Es from a wave profile of the measured capacitor voltage Vc, and holds the values in the storage unit.

4. The vehicle power source device of claim 1, further comprising a temperature sensor electrically connected to the control circuit and measuring a temperature of the engine or the starter,

wherein the control circuit corrects the capacitor charge voltage V1 based on a temperature detected by the temperature sensor.

5. The vehicle power source device of claim 4, wherein the control circuit makes the capacitor charge voltage V1 larger as a temperature detected by the temperature sensor is lower.

**6.** The vehicle power source device of claim 1, wherein when the control circuit connects the first terminal and the third terminal of the switch to each other to drive the starter, the control circuit obtains capacitor voltage drop range ΔVd at the capacitor voltage Vc, and updates values of the starter maximum electric current Is and the starter internal resistance Rs based on the capacitor charge voltage V1, the capacitor equivalent series resistance R, and the capacitor voltage drop range ΔVd, and stores the values in the storage unit.

**7.** The vehicle power source device of claim 6, wherein the control circuit obtains the starter maximum electric current Is from Equation 5, and obtains the starter internal resistance Rs from Equation 6.
[Math. 5]

$$\mathrm{Is} = \Delta \mathrm{Vd}/\mathrm{R} \qquad \text{(Equation 5)}$$

[Math. 6]

$$\mathrm{Rs} = \mathrm{V1}/\mathrm{Is}\text{-}\mathrm{R} \qquad \text{(Equation 6)}$$

**8.** The vehicle power source device of claim 1, wherein when the starter is driven in a state in which charging of the capacitor has not been completed, the control circuit connects the second terminal and the third terminal of the switch to each other, and transmits electric power of the battery to the starter.

**Amended claims under Art. 19.1 PCT**

**1.** (Amended). A vehicle power source device which is used in a vehicle having an engine and a starter for starting the engine and which drives the starter, comprising:

a battery;
a charging circuit electrically connected to a positive electrode of the battery;
a capacitor having a positive electrode electrically connected to the charging circuit;
a three-terminal switch including a first terminal connected to the positive electrode of the capacitor, a second terminal connected to the positive electrode of the battery, and a third terminal connected to the starter;
a voltage detection circuit connected in parallel to the capacitor, and detecting capacitor voltage Vc;
a current detection circuit connected between the charging circuit and the positive electrode of the capacitor, and detecting capacitor charge current Ic;
a storage unit for holding values of starter driving energy Es, which is electrical energy for driving the starter, capacitor voltage Ve immediately before start of engine, which is a capacitor voltage immediately before the engine starts and begins rotating, starter internal resistance Rs which is internal resistance of the starter, and starter maximum electric current Is which is an electric current necessary for the starter to begin rotating; and
a control circuit electrically connected to the charging circuit, the switch, the starter, the voltage detection circuit, the current detection circuit, and the storage unit,
wherein the third terminal of the switch is capable of being connected to the first terminal or the second terminal, and
when the capacitor is charged to drive the starter, the control circuit obtains capacitor equivalent series resistance R from Equation 1 and capacitor capacitance C from Equation 2, from the capacitor voltage Vc, including a capacitor voltage Vc1 immediately before charging begins , a capacitor voltage Vc2 immediately after charging begins , and a capacitor voltage Vc3 at a time point at which predetermined period ts has passed, and the capacitor charge current Ic; and controls the charging circuit to charge the capacitor to capacitor charge voltage V1, which is determined by whichever a larger one of V1a obtained from Equation 3 or V1b obtained from Equation 4, based on
the capacitor equivalent series resistance R,
the capacitor capacitance C,
a value of starter driving energy Es held in the storage unit,
a value of capacitor voltage Ve immediately before start of engine, which is stored in the storage unit,
a value of starter internal resistance Rs held in the storage unit, and

a value of starter maximum electric current Is held in the storage unit.
[Math. 1]

$$R = (Vc2 - Vc1)/Ic \qquad \text{(Equation 1)}$$

[Math. 2]

$$C = Ic \cdot ts/(Vc3 - Vc2) \qquad \text{(Equation 2)}$$

[Math. 3]

$$V1a = ((2Es/C) + Ve^2)^{1/2} \qquad \text{(Equation 3)}$$

[Math. 4]

$$V1b = Is \cdot (R + Rs) \qquad \text{(Equation 4)}$$

**2.** . (Cancelled)

**3.** . The vehicle power source device of claim 1, wherein when the control circuit connects the first terminal and the third terminal of the switch to each other to drive the starter, the control circuit measures the capacitor voltage Vc with time, updates values of the capacitor voltage Ve immediately before start of the engine and the starter driving energy Es from a wave profile of the measured capacitor voltage Vc, and holds the values in the storage unit.

**4.** . The vehicle power source device of claim 1, further comprising a temperature sensor electrically connected to the control circuit and measuring a temperature of the engine or the starter,
wherein the control circuit corrects the capacitor charge voltage V1 based on a temperature detected by the temperature sensor.

**5.** . The vehicle power source device of claim 4, wherein the control circuit makes the capacitor charge voltage V1 larger as a temperature detected by the temperature sensor is lower.

**6.** (Amended). The vehicle power source device of claim 1, wherein when the control circuit connects the first terminal and the third terminal of the switch to each other to drive the starter, the control circuit obtains capacitor voltage drop range $\Delta Vd$ at the capacitor voltage Vc, and updates values of the starter maximum electric current Is obtained from Equation 5 and the starter internal resistance Rs obtained from Equation 6, based on the capacitor charge voltage V1, the capacitor equivalent series resistance R, and the capacitor voltage drop range $\Delta Vd$, and stores the values in the storage unit.
[Math. 5]

$$Is = \Delta Vd/R \qquad \text{(Equation 5)}$$

[Math. 6]

$$Rs = V1/Is - R \qquad \text{(Equation 6)}$$

**7.** . (Cancelled)

**8.** . The vehicle power source device of claim 1, wherein when the starter is driven in a state in which charging of the capacitor has not been completed, the control circuit connects the second terminal and the third terminal of the switch to each other, and transmits electric power of the battery to the starter.

# FIG. 1

# FIG. 2A

START

S11 — IS STARTER NOT DRIVEN? — No → RETURN

Yes

S17 — DETECT CAPACITOR VOLTAGE Vc1 IMMEDIATELY BEFORE CHARGING BEGINS

S19 — CHARGE CAPACITOR WITH CONSTANT CURRENT I

S21 — DETECT CAPACITOR VOLTAGE Vc2 IMMEDIATELY AFTER CHARGING BEGINS

S22 — DETECT CAPACITOR CURRENT Ic

S23 — OBTAIN CAPACITOR INTERNAL RESISTANCE R FROM $R=(Vc2-Vc1)/Ic$

S25 — HAS PREDETERMINED PERIOD ts PASSED? — No

Yes

S27 — DETECT CAPACITOR VOLTAGE Vc3

S29 — OBTAIN CAPACITOR CAPACITANCE C FROM $C=Ic \cdot ts/(Vc3-Vc2)$

S31 — CALCULATE CAPACITOR CHARGE VOLTAGE V1a FROM $Es=C \cdot (V1a^2-Ve^2)/2$ FROM STARTER DRIVING ENERGY Es AND CAPACITOR VOLTAGE Ve IMMEDIATELY BEFORE START OF ENGINE

1

## FIG. 2B

( 1 )

**S33** CALCULATE CAPACITOR CHARGE VOLTAGE V1b FROM Is=V1b/(R+Rs) FROM STARTER INTERNAL RESISTANCE Rs AND STARTER MAXIMUM ELECTRIC CURRENT Is

**S35** DETERMINE LARGER ONE OF V1a AND V1b AS CAPACITOR CHARGE VOLTAGE V1

**S37** DETECT TEMPERATURE T

**S39** OBTAIN TEMPERATURE CORRECTION FACTOR k CORRESPONDING TO TEMPERATURE T FROM TABLE AND CARRY OUT TEMPERATURE CORRECTION OF CAPACITOR CHARGE VOLTAGE V1 from $V1 \leftarrow k \cdot V1$

**S46** CHARGE CAPACITOR

**S43** DETECT CAPACITOR VOLTAGE Vc

**S45** $Vc < V1$  Yes / No

**S47** CONTROL CHARGING CIRCUIT TO STOP CAPACITOR CHARGING AND TO MAINTAIN CAPACITOR VOLTAGE Vc

RETURN

## FIG. 3

START

S51 — IS IDLING-STOP ENDED? — No

Yes

S53 — BEGIN MEASUREMENT WITH TIME OF CAPACITOR VOLTAGE Vc

S55 — CHANGE SWITCH TO CAPACITOR SIDE

S57 — STOP CHARGING CIRCUIT

S59 — DRIVE STARTER

S61 — HAS START OF ENGINE COMPLETED? — No

Yes

S63 — STOP STARTER

S65 — TURN OFF SWITCH

S67 — STOP MEASUREMENT WITH TIME OF CAPACITOR VOLTAGE Vc

S69 — OBTAIN CAPACITOR VOLTAGE DROP RANGE ΔVd FROM CHARACTERISTICS WITH TIME OF CAPACITOR VOLTAGE Vc OF FIG. 4

2

2

S71 — OBTAIN STARTER MAXIMUM ELECTRIC CURRENT Is FROM $Is = \Delta Vd/R$

S73 — OBTAIN STARTER INTERNAL RESISTANCE Rs FROM $Rs = V1/Is-R$

S75 — EXTRACT PART AT TIME t2 OF FIG. 4 FROM MEASUREMENT DATA WITH TIME OF CAPACITOR VOLTAGE Vc

S77 — OBTAIN CAPACITOR VOLTAGE Vc AT TIME t2 AS CAPACITOR VOLTAGE Ve IMMEDIATELY BEFORE START OF ENGINE

S79 — OBTAIN STARTER DRIVING ENERGY Es FROM $Es = C \cdot (V1^2 - Ve^2)/2$

RETURN

FIG. 4

# FIG. 5

<table>
<tr><td colspan="2" style="text-align:center">**INTERNATIONAL SEARCH REPORT**</td><td>International application No.<br>PCT/JP2012/004853</td></tr>
</table>

**A.   CLASSIFICATION OF SUBJECT MATTER**
*F02N11/08*(2006.01)i

According to International Patent Classification (IPC) or to both national classification and IPC

**B.   FIELDS SEARCHED**

Minimum documentation searched (classification system followed by classification symbols)
F02N11/08

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| A | JP 2010-246198 A  (Nissan Motor Co., Ltd.),<br>28 October 2010 (28.10.2010),<br>entire text; all drawings<br>(Family: none) | 1-8 |
| A | JP 2007-309100 A  (Matsushita Electric Industrial Co., Ltd.),<br>29 November 2007 (29.11.2007),<br>entire text; all drawings<br>(Family: none) | 1-8 |
| A | JP 2009-146843 A  (Panasonic Corp.),<br>02 July 2009 (02.07.2009),<br>entire text; all drawings<br>(Family: none) | 1-8 |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    18 October, 2012 (18.10.12) | Date of mailing of the international search report<br>    30 October, 2012 (30.10.12) |
|---|---|
| Name and mailing address of the ISA/<br>    Japanese Patent Office | Authorized officer |
| Facsimile No. | Telephone No. |

Form PCT/ISA/210 (second sheet) (July 2009)

# EP 2 749 763 A1

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2004-190604 A  (Matsushita Electric Industrial Co., Ltd.), 08 July 2004 (08.07.2004), entire text; all drawings (Family: none) | 1-8 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003035243 A